# EUROPÄISCHE PATENTANMELDUNG

(11) **EP 2 333 430 A2**
(43) Veröffentlichungstag der Anmeldung: **15.06.2011**
(21) Anmeldenummer: 10014810.5
(22) Anmeldetag: 20.11.2010
(51) Int. Cl.: F24D 3/18

(54) **Wärmepumpe**

(30) Priorität: 30.11.2009 AT 18962009
(71) Anmelder: Vaillant GmbH, 42859 Remscheid (DE)
(72) Erfinder: Burgdorf, Achim, 42929 Wermelskirchen (DE); Lang, Rainer, Dr., 51519 Odenthal (DE); Marth, Frank, 56581 Melsbach (DE); Neubert, Marcel, 08209 Auerbach (DE); Wienen, Johann, 46359 Heiden (DE)
(74) Vertreter: Hocker, Thomas

(57) **Zusammenfassung**

Bei einer Wärmepumpe (1) mit einem Heizungskreislauf (13), in dem sich mindestens ein Wärmeverbraucher (3) und eine erste Umwälzpumpe (7) befinden, und einem Umweltwärmekreislauf (14), in dem sich mindestens eine Umweltwärmequelle (2) und einen zweite Umwälzpumpe (6) befinden, ist in der Rücklaufleitung (11) des Heizungskreislaufs (13) ein erster Temperatursensor (5) angeordnet, ist in der Vorlaufleitung (15) des Umweltwärmekreislauf (14) ein zweiter Temperatursensor (4) angeordnet, ist im Heizungskreislaufs (13) parallel zur Wärmepumpe (1) ein Wärmetauscher (8) angeschlossen, ist im Umweltwärmekreislauf (14) parallel zur Wärmepumpe (1) derselbe Wärmetauscher (8) angeschlossen, und es sind ersten und zweiten Absperr- oder Umschaltorgane (9, 10) zum wechselweisen Verbinden der Umweltwärmequelle (2) mit der Wärmepumpe (1) oder dem Wärmetauscher (8) und / oder zum wechselweisen Verbinden des mindestens einen Wärmeverbrauchers (3) mit der Wärmepumpe (1) oder dem Wärmetauscher (8) vorhanden.

## Beschreibung

Die Erfindung bezieht sich auf eine Wärmepumpe.

Mittels Wärmepumpen kann Umweltwärme von einem relativ niedrigen Temperaturniveau mittels eines Kältemittelskreislaufs auf ein höheres Temperaturniveau für Heizzwecke befördert. In diesem Kältemittelkreislauf wird mittels eines Expansionsventils Kältemittel entspannt, wodurch es sich stark abkühlt (adiabate Expansion). Hierdurch wird das Kältemittel derart weit abgekühlt, dass es in einer Umweltwärmequelle selbst bei sehr niedrigen Temperaturen Wärme aufnehmen kann. Anschließend wird das Kältemittel in einem Kompressor verdichtet, wodurch sich das Kältemittel abermals erwärmt. Das so erwärmte Kältemittel kann dann Wärme zum Beispiel an einen Heizkreislauf abgeben. Anschließend wird das Kältemittel wieder im Kreislauf dem Expansionsventil zugeführt. Hierdurch lässt sich selbst bei Temperaturen von -10°C Umweltwärme für Heizzwecke nutzen.

Der Kältemittelkreislauf benötigt jedoch Antriebenergie für den Kompressor; dieser Antrieb erfolgt in der Regel elektrisch, also mittels Exergie.

Aus DE 27 11 624 ist bekannt, Wärme einer Umweltwärmequelle unter Umgehung einer Wärmepumpe direkt in einen Heizkreislauf einzubinden. Umweltwärmekreisläufe sind frostgefährdet. Um diese Problem zu lösen, befindet sich häufig Sole im Umweltwärmekreislauf. Eine einfache Verbindung des soleführenden Umweltwärmekreislaufs mit dem Heizungskreislauf, in dem sich in der Regel Leitungswasser befindet, ist daher nicht möglich. Die Sole würde im Heizungskreislauf zu Korrosion führen und das Leitungswasser würde die Sole derartig verdünnen, dass sie bei geringen Minustemperaturen einfrieren könnte. Eine andere Lösung zur Vermeidung des Einfrierens besteht darin, dass im Umweltwärmekreislauf ein Drainback eingebaut ist. Die Pumpe fördert Wasser aus dem Drainback in den Kollektor, wo es erwärmt wird. Bei Pumpenstillstand läuft das Wasser in den frostsicheren Drainback-Behälter im Wohnhaus. Eine Vorrichtung gemäß DE 27 11 624 ist demnach bei Drainback-Systemen nicht einsetzbar, da im Heizungskreislauf ein Überdruck von 1 bis 2 bar herrscht. Somit ist der Einsatz einer Vorrichtung gemäß DE 27 11 624 auf frostsichere Systeme, zum Beispiel mit Erdsonden beschränkt.

Der Erfindung liegt die Aufgabe zugrunde, den Exergieeintrag einer Wärmepumpe bedarfsgerecht zu reduzieren.

Erfindungsgemäß wird dies gemäß den Merkmalen des unabhängigen Anspruchs 1 dadurch gelöst, dass der Kältemittelkreislauf unter bestimmten Voraussetzungen umgangen wird. Ist die Temperatur im Umweltwärmekreislauf bereits auf dem oder über dem Niveau des zu beheizenden Mediums, so kann der Kältemittelkreislauf umgangen werden.

Im Sommer befindet sich die Temperatur der Umweltwärmequelle häufig bereits auf dem Temperaturniveau des Heizkreislaufs, so dass eine Temperaturanhebung mittels Wärmepumpe nicht zwingend notwendig ist.

Vorteilhafte Ausgestaltungen der Erfindung ergeben sich durch die Merkmale der abhängigen Verfahrensansprüche.

Die Erfindung wird nun anhand der Figuren detailliert erläutert. Hierbei zeigen:
Figur 1 eine Variante einer erfindungsgemäßen Wärmepumpe,
Figur 2 eine alternative Variante einer erfindungsgemäßen Wärmepumpe in einer Betriebsstellung und
Figur 3 die alternative Variante einer erfindungsgemäßen Wärmepumpe in einer anderen Betriebsstellung.

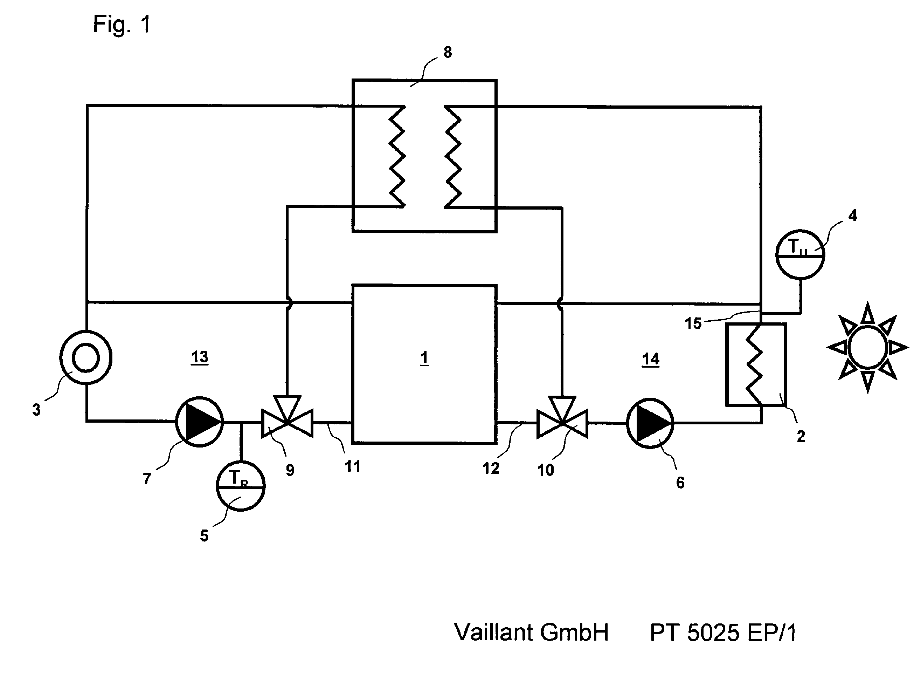

Eine Wärmepumpe 1 gemäß Figur 1 ist mit einem Heizungskreislauf 13, in dem sich ein Wärmeverbraucher 3 und eine erste Umwälzpumpe 7 befinden, und einem Umweltwärmekreislauf 14, in dem sich eine Umweltwärmequelle 2 und eine zweite Umwälzpumpe 6 befinden, verbunden. In der Rücklaufleitung 11 des Heizungskreislaufs 13 ist ein erster Temperatursensor 5 angeordnet. In der Vorlaufleitung 15 des Umweltwärmekreislaufs 14 ist ein zweiter Temperatursensor 4 angeordnet. Parallel zur Wärmepumpe 1 ist im Heizungskreislaufs 13 ein Wärmetauscher 8 angeschlossen ist. Im Umweltwärmekreislauf 14 ist parallel zur Wärmepumpe 1 derselbe Wärmetauscher 8 angeschlossen. Ein erstes Umschaltventil 9 in der Rücklaufleitung 11 des Heizungskreislaufs 13 dient zum wechselweisen Verbinden des Wärmeverbrauchers 3 mit der Wärmepumpe 1 oder dem Wärmetauscher 8. Ein zweites Umschaltventil 10 in der Rücklaufleitung 12 des Umweltwärmekreislaufs 14 dient analog hierzu zum wechselweisen Verbinden der Umweltwärmequelle 2 mit der Wärmepumpe 1 oder dem Wärmetauscher 8.

Beim Betrieb der Vorrichtung werden mittels der Temperatursensoren 4, 5 die Temperaturen in der Vorlaufleitung des Umweltwärmekreislaufs 14 und in der Rücklaufleitung 11 des Heizungskreislaufs 13 gemessen. In dem Fall, in dem die mittels des ersten Temperatursensors 5 in der Rücklaufleitung 11 des Heizungskreislaufs 13 gemessenen Temperatur T_{R} um mindestens eine bestimmte Temperaturdifferenz ΔT niedriger ist als mittels des zweiten Temperatursensors 4 in der Vorlaufleitung 15 des Umweltwärmekreislaufs 14 gemessenen Temperatur Tᵤ, werden die Umweltwärmequelle 2 und der Wärmeverbraucher 3 mit dem Wärmetauscher 8 verbunden. In dem anderen Fall, in dem die mittels des ersten Temperatursensors 5 in der Rücklaufleitung 11 des Heizungskreislaufs 13 gemessenen Temperatur T_{R} nicht um mindestens eine bestimmte Temperaturdifferenz ΔT niedriger als mittels des zweiten Temperatursensors 4 in der Vorlaufleitung 15 des Umweltwärmekreislaufs 14 gemessenen Temperatur Tᵤ ist, werden die Umweltwärmequelle 2 und die Wärmeverbraucher 3 mit der Wärmepumpe 1 verbunden.

Hierdurch kann unter Umgehung der Wärmepumpe 1 bei hohen Temperaturen im Umweltwärmekreislauf 14 unmittelbar Wärme auf den Heizkreislauf 13 übertragen werden.

So ist es beispielsweise im Hochsommer möglich, Wärme eine Umweltwärmequelle Solarkollektor 2 direkt zu übertragen. Beträgt beispielsweise die mittels des zweiten Temperatursensors 4 in der Vorlaufleitung 15 des Umweltwärmekreislaufs 14 gemessenen Temperatur Tᵤ 50°C und die mittels des ersten Temperatursensors 5 in der Rücklaufleitung 11 des Heizungskreislaufs 13 gemessenen Temperatur T_{R} 30°C, so ist die zum effizienten Betrieb des Wärmetauschers 8 notwendige Temperaturdifferenz ΔT von mindestens 3 K überschritten. Die Wärmeübertragung erfolgt dann unmittelbar vom Umweltwärmekreislauf 14 auf den Heizkreislauf 13 über den Wärmetauscher 8. Fällt die Temperaturdifferenz ΔT unter 3 K, so erfolgt die Wärmeübertragung über die Wärmepumpe 1, welche die Wärme des Umweltwärmekreislaufs 14 im Wärmepumpenkreislauf anhebt.

Bevor bei fallender Temperatur Tᵤ des zweiten Temperatursensors 4 die Wärmeübertragung über die Wärmepumpe 1 erfolgt, kann zunächst die Förderleistung der zweiten Umwälzpumpe im Umweltwärmekreislauf 14 reduziert werden. Bei gleichem Wärmeintrag in den Solarkollektor 2 steigt somit die Temperatur Tᵤ im Umweltwärmekreislauf 14. Da jedoch dadurch die Wärmeleistung nicht erhöht werden kann, muss bei entsprechender Wärmeanforderung auf der Heizungsseite die Wärmepumpe 1 zwischengeschaltet werden, um diese Wärmeanforderung zu befriedigen.

Wärmeverbraucher 3 im Sinne dieser Erfindung können sowohl mindestens ein Raumheizungskreislauf, ein Warmwasserspeicher und / oder eine Brauchwasserbereitung sein.

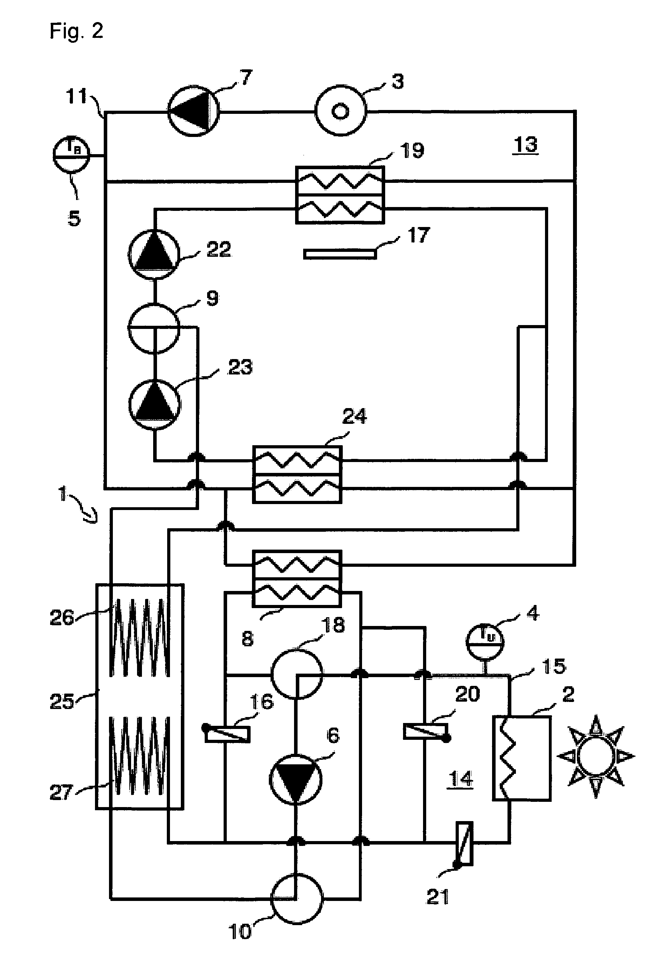

Figur 2 zeigt eine alternative Variante einer erfindungsgemäßen Wärmepumpe. Dabei handelt es sich um eine Adsorptionswärmepumpe, wie sie prinzipiell aus EP 1970648 bekannt ist. Kernstück der Wärmepumpe 1 ist ein Vakuummodul 25, in dem ein Adsorber / Desorber 26 und ein Verdampfer / Kondensator 27 angeordnet sind. Der Adsorber / Desorber 26 arbeitet in der Adsorptionsphase als Adsorber und in der Desorptionsphase als Desorber. Der Verdampfer / Kondensator 27 arbeitet in der Adsorptionsphase als Verdampfer und in der Desorptionsphase als Kondensator. Die Wärmepumpe 1 verfügt ferner über eine dritte und vierte Umwälzpumpe 22, 23, einen Sekundärwärmetauscher 24 sowie ein drittes Absperr- oder Umschaltorgan 18. Ferner befinden sich auf der Seite des Umweltwärmequelle 2 im Kreislauf mehrere Rückschlagklappen 16, 20, 21.

Figur 2 zeigt die alternative Wärmepumpe 1 in der Adsorptionsphase. Umweltwärme wird von der Umweltwärmequelle 2 mittels der zweiten Umwälzpumpe 6 über das zweite und dritten Umschaltorgan 10, 18 zum Verdampfer 27 geleitet, wo die Wärme im Vakuummodul 25 Kältemittel verdampft, das am Adsorber 26 absorbiert. Die dabei freiwerdende Wärme wird über den Heizungskreislauf 13 mittels der ersten Umwälzpumpe 7 zum Wärmeverbraucher 3 transportiert. Die Schaltstellung des zweiten und dritten Umschaltorgans 10, 18 ist derartig geschaltet, dass der Wärmetauscher 8 auf der Seite der Umweltwärmequelle nicht durchströmt wird, so dass im Wärmetauscher 8 keine Wärme übertragen wird.

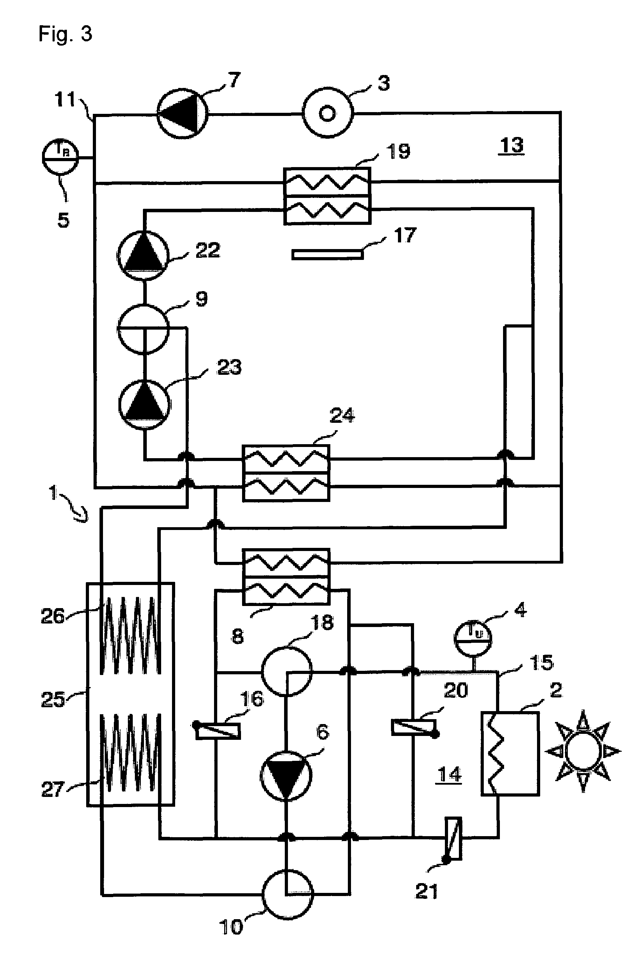

Figur 3 zeigt dieselbe alternative Wärmepumpe 1 bei der Direktheizung mit Umweltwärme. Umweltwärme wird von der Umweltwärmequelle 2 mittels der zweiten Umwälzpumpe 6 über das zweite und dritte Umschaltorgan 10, 18 zum Wärmetauscher 8 geleitet. Dort wird Wärme auf den Heizungskreislauf 13 übertragen und mittels der ersten Umwälzpumpe 7 zum Wärmeverbraucher 3 transportiert. Die Rückschlagklappen 16, 20, 21 sorgen dafür, dass die zweiten Umwälzpumpe 6 das Fluid jeweils nur in eine bestimmte Richtung fördern kann und eine ungewollte Durchströmung nicht erfolgen kann.

In der nicht dargestellten Desorptionsphase ist die erste Umwälzpumpe 7 ausgeschaltet. Wärme wird von dem Brenner 17 auf den Primärwärmetauscher 19 übertragen und zum Desorber 26 geleitet. Dort wird das Kältemittel ausgetrieben und strömt zum Kondensator 27, wo es kondensiert und Wärme abgibt. Die Wärme wird weitergeleitet und an den Heizungskreislauf 13 übergeben.

Erfindungsgemäß muss auf mindestens einer Seite des Wärmetauschers 8 die Wärme beim Wechsel der Betriebsmodi umgeschaltet werden. Wie im Ausführungsbeispiel der Figur 1 kann auf beiden Seiten umgeschaltet werden. Es ist aber auch gemäß Ausführungsbeispiel in den Figuren 2 und 3 möglich, dass zeitweise zwar der Wärmetauscher 8 einseitig durchströmt wird, auf der anderen Seite jedoch kein Fluid strömt, so dass dann in dem Wärmetauscher 8 keine Wärme übertragen wird.

Erfindungsgemäß können einzelne Details der beiden Ausführungsformen kombiniert werden.

## Patentansprüche

1. Wärmepumpe (1) mit einem Heizungskreislauf (13), in dem sich mindestens ein Wärmeverbraucher (3) und eine erste Umwälzpumpe (7) befinden, und einem Umweltwärmekreislauf (14), in dem sich mindestens eine Umweltwärmequelle (2) und einen zweite Umwälzpumpe (6) befinden,
**dadurch gekennzeichnet, dass** in der Rücklaufleitung (11) des Heizungskreislaufs (13) ein erster Temperatursensor (5) angeordnet ist, in der Vorlaufleitung (15) des Umweltwärmekreislauf (14) ein zweiter Temperatursensor (4) angeordnet ist, im Heizungskreislaufs (13) parallel zur Wärmepumpe (1) ein Wärmetauscher (8) angeschlossen ist, im Umweltwärmekreislauf (14) parallel zur Wärmepumpe (1) derselbe Wärmetauscher (8) angeschlossen ist, und einem ersten und zweiten Absperr- oder Umschaltorgan (9, 10) zum wechselweisen Verbinden der Umweltwärmequelle (2) mit der Wärmepumpe (1) oder dem Wärmetauscher (8) und / oder zum wechselweisen Verbinden des mindestens einen Wärmeverbrauchers (3) mit der Wärmepumpe (1) oder dem Wärmetauscher (8) vorhanden sind.

2. Verfahren zum Betrieben einer Wärmepumpe (1) mit einem Heizungskreislauf (13), in dem sich mindestens ein Wärmeverbraucher (3) und eine erste Umwälzpumpe (7) befinden, und einem Umweltwärmekreislauf (14), in dem sich mindestens eine Umweltwärmequelle (2) und einen zweite Umwälzpumpe (6) befinden, wobei in der Rücklaufleitung (11) des Heizungskreislaufs (13) ein erster Temperatursensor (5) angeordnet ist, in der Vorlaufleitung (15) des Umweltwärmekreislauf (14) ein zweiter Temperatursensor (4) angeordnet ist, im Heizungskreislaufs (13) parallel zur Wärmepumpe (1) ein Wärmetauscher (8) angeschlossen ist, im Umweltwärmekreislauf (14) parallel zur Wärmepumpe (1) derselbe Wärmetauscher (8) angeschlossen ist, und einem ersten und zweiten Absperr- oder Umschaltorgan (9, 10) zum wechselweisen Verbinden der Umweltwärmequelle (2) mit der Wärmepumpe (1) oder dem Wärmetauscher (8) und / oder zum wechselweisen Verbinden des mindestens einen Wärmeverbrauchers (3) mit der Wärmepumpe (1) oder dem Wärmetauscher (8) vorhanden sind, **dadurch gekennzeichnet, dass** in dem Fall, in dem die mittels des ersten Temperatursensors (5) in der Rücklaufleitung (11) des Heizungskreislaufs (13) gemessenen Temperatur um mindestens eine bestimmte Temperaturdifferenz ΔT niedriger ist als mittels des zweiten Temperatursensors (4) in der Vorlaufleitung (15) des Umweltwärmekreislaufs (14) gemessenen Temperatur, die Umweltwärmequelle (2) und die Wärmeverbraucher (3) mit dem Wärmetauscher (8) verbunden werden und in dem anderen Fall die Umweltwärmequelle (2) und die Wärmeverbraucher (3) mit der Wärmepumpe (1) verbunden werden.

3. Verfahren zum Betrieben einer Wärmepumpe (1) nach Anspruch 2, **dadurch gekennzeichnet, dass** zur Anhebung der mittels des zweiten Temperatursensors (4) in der Vorlaufleitung (11) des Umweltwärmekreislaufs (14) gemessenen Temperatur die Förderleistung der zweiten Umwälzpumpe (6) in dem Umweltwärmekreislauf (14) reduziert wird.
